# FASCICULE DE BREVET EUROPEEN

(11) **EP 3 392 146 B1**
(45) Date de publication et mention de la délivrance du brevet: **06.11.2019**
(21) Numéro de dépôt: 18167305.4
(22) Date de dépôt: 13.04.2018
(51) Int. Cl.: B64D 13/06, B61D 27/00, B60H 1/00, B63J 2/02, B64D 13/08

(54) **PROCÉDÉ ET DISPOSITIF DE CONTRÔLE THERMIQUE D'UNE PLURALITÉ DE CABINES D'UN VÉHICULE**
VERFAHREN UND VORRICHTUNG ZUR WÄRMEKONTROLLE EINER VIELZAHL VON KABINEN EINES FAHRZEUGS
METHOD AND DEVICE FOR THERMAL CONTROL OF A PLURALITY OF CABINS OF A VEHICLE

(30) Priorité: 20.04.2017 FR 1753435
(43) Date de publication de la demande: 24.10.2018
(73) Titulaire: Liebherr-Aerospace Toulouse SAS, 31200 Toulouse (FR)
(72) Inventeur: GALZIN, Guillaume, 31200 Toulouse (FR)
(74) Mandataire: Cabinet BARRE LAFORGUE & associés

(56) Documents cités:
- EP-A1- 1 701 884
- EP-A2- 0 940 336
- DE-A1-102013 005 595
- US-A1- 2011 126 562
- US-A1- 2013 160 472

## Description

L'invention concerne un procédé et un dispositif de contrôle thermique d'une pluralité de cabines d'un véhicule -notamment d'un aéronef-. Elle s'étend également à un véhicule -notamment à un aéronef- doté d'au moins un dispositif de contrôle thermique selon l'invention.

Dans tout le texte, le terme « cabine » désigne tout espace intérieur de véhicule -notamment d'aéronef- dans lequel au moins la température de l'air doit être contrôlée. Il peut donc s'agir aussi bien d'une zone de réception de passagers, que d'un cockpit, d'une soute, d'un espace de chargement de fret... L'expression « contrôle thermique » désigne le fait de contrôler au moins la température de l'air dans une cabine. L'expression « boucle de régulation thermique » désigne tout dispositif comprenant au moins un circuit fermé dans lequel circule au moins un fluide caloporteur au contact d'au moins une source froide de façon à pouvoir échanger des calories avec cette source froide et au contact d'au moins une source chaude de façon à pouvoir échanger des calories avec cette source chaude.

Les véhicules sont le plus souvent dotés d'au moins un dispositif, dit dispositif ou système de contrôle environnemental (ECS), permettant au moins un contrôle thermique de chaque cabine du véhicule. Chaque cabine est alimentée en air à partir d'une chambre de mélange permettant en particulier le mélange d'air de recirculation en provenance de tout ou partie des cabines avec l'air délivré par chaque dispositif de contrôle environnemental.

Dans le cas des aéronefs notamment, les dispositifs de contrôle environnemental sont le plus souvent réalisés à base d'au moins une machine à cycle à air permettant également de contrôler la pression de l'air. Un véhicule peut aussi être doté d'au moins une boucle de régulation thermique à fluide caloporteur diphasique liquide/gaz (notamment un dispositif dit à cycle vapeur (VCS)) et/ou d'au moins une boucle de régulation thermique à liquide caloporteur monophasique, par exemple pour le refroidissement d'équipements embarqués tels que des équipements électroniques de puissance et/ou des réfrigérateurs, ou pour le chauffage d'équipements embarqués tels que des fours de cuisson ou autres.

De très nombreuses propositions, surtout théoriques, ont été formulées pour l'optimisation de la gestion thermique à bord d'un véhicule à partir des différentes sources froides et chaudes et des différentes boucles thermiques à cycle à air et/ou à cycle vapeur et/ou à cycle liquide monophasique disponibles à bord du véhicule.

Il reste que le problème du contrôle thermique d'une pluralité de cabines d'un même véhicule à partir d'une même chambre de mélange n'est pas, en pratique, optimisé du point de vue énergétique.

En effet, dans les systèmes connus les plus rudimentaires, l'air en sortie de la chambre de mélange est alimenté indifféremment dans les différentes cabines du véhicule. Or, ces différentes cabines ayant en pratique des besoins thermiques différents, la température stabilisée dans chaque cabine est différente d'une cabine à l'autre et ne peut pas être régulée en fonction d'une température de consigne propre à chaque cabine.

Dans certains systèmes connus plus évolués (cf. par exemple EP1701884), le contrôle thermique de plusieurs cabines est réalisé en contrôlant la température de l'air à la sortie de la chambre de mélange en fonction de la cabine ayant la plus forte demande en puissance froide, chaque autre cabine étant alimentée à partir d'air en provenance de la chambre de mélange réchauffé par un réchauffeur électrique interposé entre la chambre de mélange et la cabine, ou par injection d'air chaud en provenance des moteurs de propulsion du véhicule. La température au sein de chaque cabine peut être régulée en fonction des besoins thermiques propres à chaque cabine, et éventuellement en fonction d'une température de consigne propre à chaque cabine. Néanmoins, ces systèmes connus dans lesquels en mode refroidissement l'air initialement refroidi par un système de contrôle environnemental est réchauffé pour ajuster sa température aux besoins d'au moins une cabine induisent un gaspillage énergétique qu'il convient d'éviter. Dans d'autres systèmes connus, il a été proposé d'alimenter chaque cabine à partir d'un système de contrôle environnemental par l'intermédiaire d'un injecteur d'eau évaporée de refroidissement et d'un réchauffeur électrique propre à chaque cabine. Ces systèmes sont également peu performants du point de vue de leur rendement énergétique, complexes et coûteux en termes de matériels et de logique de pilotage.

Le document US 2011/126562 A1 divulgue autre exemple d'un dispositif de contrôle thermique.

L'invention vise donc à pallier l'ensemble de ces inconvénients.

Elle vise en particulier à proposer un procédé et un dispositif de contrôle thermique permettant un contrôle thermique individuel de chaque cabine d'une pluralité de cabines d'un véhicule -notamment d'un aéronef- à partir d'une même chambre de mélange dans des conditions de rendement énergétique améliorées, et ce de façon simple, fiable et peu coûteuse.

Elle vise également à proposer un tel procédé et un tel dispositif de contrôle thermique qui soient opérationnels dans toutes les conditions d'utilisation du véhicule, en particulier dans toutes les conditions de fonctionnement et de vol d'un aéronef (au sol, au décollage, en vol à haute altitude, en vol à basse altitude, à l'atterrissage,...).

Elle vise en particulier à proposer un tel procédé et un tel dispositif de contrôle thermique qui ne nécessitent pas l'utilisation de réchauffeurs électriques ni d'injection d'air chaud prélevé sur les moteurs de propulsion du véhicule ou d'eau évaporée dans les conduites d'alimentation propres à chaque cabine pour le réchauffage et/ou le refroidissement individuel de l'air en provenance de la chambre de mélange.

Pour ce faire, l'invention concerne un procédé de contrôle thermique d'une pluralité de cabines d'un véhicule à partir d'une chambre de mélange alimentée en air à partir d'au moins un dispositif d'alimentation en air dont au moins la température est contrôlée, chaque cabine étant alimentée en air :
- à partir de la chambre de mélange,
- par une conduite d'alimentation propre à cette cabine,
- indépendamment de chaque autre cabine,
caractérisé en ce que :
- au moins une cabine est alimentée en air à une température ajustée par au moins un échangeur de chaleur, dit échangeur individuel, associé à ladite conduite d'alimentation propre à cette cabine,
- de l'air en provenance de la chambre de mélange traversant un premier circuit de chaque échangeur individuel associé à ladite conduite d'alimentation propre à une cabine et alimentant indépendamment ladite cabine, ce premier circuit étant interposé entre ladite cabine et la chambre de mélange sur ladite conduite d'alimentation propre à ladite cabine,
- au moins un deuxième circuit d'au moins un échangeur individuel associé à une conduite d'alimentation propre à une cabine est alimenté par un fluide caloporteur en provenance d'au moins une boucle de régulation thermique du véhicule,
- ce fluide caloporteur étant sélectionné :
   ∘ parmi :
      ▪ au moins un fluide caloporteur prélevé sur une boucle de régulation thermique du véhicule à une température supérieure à la température de l'air en provenance de la chambre de mélange,
      ▪ au moins un fluide caloporteur prélevé sur une boucle de régulation thermique du véhicule à une température inférieure à la température de l'air en provenance de la chambre de mélange,
   ∘ pour que chaque échangeur individuel associé à la conduite d'alimentation propre à ladite cabine ajuste individuellement la température de l'air alimentant ladite cabine en fonction d'une température de consigne pour ladite cabine.

L'invention s'étend à un dispositif adapté pour la mise en œuvre d'un procédé selon l'invention. Elle concerne donc également un dispositif de contrôle thermique d'une pluralité de cabines d'un véhicule comprenant :
- une chambre de mélange,
- au moins un dispositif d'alimentation en air relié à la chambre de mélange pour l'alimenter en air à température contrôlée,
- un automatisme de gestion thermique adapté pour contrôler au moins la température de l'air délivré par chaque dispositif d'alimentation en air à la chambre de mélange en fonction d'au moins une température de consigne d'au moins une cabine du véhicule,
- chaque cabine étant reliée à la chambre de mélange par une conduite d'alimentation propre à cette cabine de façon à pouvoir être alimentée en air à partir de la chambre de mélange indépendamment de chaque autre cabine,
caractérisé en ce que :
- au moins un échangeur de chaleur, dit échangeur individuel, est associé à au moins une conduite d'alimentation propre à une cabine,
- chaque échangeur individuel comprend :
   ∘ un premier circuit interposé, entre ladite cabine et la chambre de mélange, sur ladite conduite d'alimentation propre à ladite cabine pour pouvoir être traversé par de l'air en provenance de la chambre de mélange et alimenter ladite cabine,
   ∘ un deuxième circuit relié à au moins une boucle de régulation thermique à fluide caloporteur du véhicule pour pouvoir être alimenté par ce fluide caloporteur,
- ledit automatisme de gestion thermique est adapté pour alimenter au moins un deuxième circuit d'au moins un échangeur individuel associé à une conduite d'alimentation propre à une cabine par un fluide caloporteur en provenance d'au moins une boucle de régulation thermique du véhicule,
- ledit automatisme de gestion thermique est adapté pour sélectionner ce fluide caloporteur :
   ∘ parmi :
      ▪ au moins un fluide caloporteur prélevé sur une boucle de régulation thermique du véhicule à une température supérieure à la température de l'air en provenance de la chambre de mélange,
      ▪ au moins un fluide caloporteur prélevé sur une boucle de régulation thermique du véhicule à une température inférieure à la température de l'air en provenance de la chambre de mélange,
   ∘ choisi pour que chaque échangeur individuel associé à la conduite d'alimentation propre à ladite cabine ajuste individuellement la température de l'air alimentant ladite cabine en fonction d'une température de consigne pour ladite cabine.

L'invention s'étend également à un procédé de contrôle thermique mis en œuvre dans un dispositif de contrôle thermique selon l'invention.

Un véhicule tel qu'un aéronef est en général systématiquement doté d'au moins une boucle de régulation thermique à fluide caloporteur -notamment un fluide caloporteur monophasique, qui peut être en particulier un liquide caloporteur monophasique ou de l'air-, pour le refroidissement d'équipements embarqués à bord du véhicule tels que des équipements électriques ou électroniques, par exemple pour le refroidissement de l'électronique de puissance. Une telle boucle de régulation thermique à fluide caloporteur monophasique est disponible et opérationnelle à bord du véhicule dans toutes les conditions de fonctionnement -notamment de vol- de ce dernier. Elle est associée à des sources chaudes (équipements à refroidir, condenseur d'une boucle diphasique à cycle vapeur (VCS)...) et à des sources froides (équipements à réchauffer, évaporateur d'une boucle diphasique à cycle vapeur (VCS), échangeurs de peau...). En conséquence, dans un procédé et un dispositif selon l'invention le fluide caloporteur peut être prélevé sur une telle boucle de régulation thermique à différentes températures, selon les besoins d'ajustement individuel de la température de chaque cabine. L'utilisation d'un tel fluide caloporteur d'une boucle de régulation thermique est par ailleurs extrêmement simple, permet d'utiliser des matériels déjà embarqués, et minimise donc l'impact en termes de poids et d'encombrement de l'adaptation du véhicule pour la mise en œuvre d'un procédé selon l'invention.

Dans un procédé et un dispositif selon l'invention, ladite température de consigne pour au moins une cabine du véhicule peut être en particulier choisie parmi une température de consigne de l'air à l'intérieur d'une cabine du véhicule, une température de consigne de l'air alimentant une cabine du véhicule, une température de consigne de l'air à l'intérieur de plusieurs cabines du véhicule, une température de consigne de l'air alimentant plusieurs cabines du véhicule, et des valeurs déterminées à partir de plusieurs de ces températures de consigne (notamment une valeur moyenne d'une pluralité de ces température de consigne). Dans certains modes de réalisation préférentiels, ladite température de consigne est une température de consigne de l'air alimentant ladite cabine.

Selon les différentes variantes de réalisation envisageables, rien n'empêche que ladite boucle de régulation thermique à fluide caloporteur soit en tout ou partie associée à au moins un dispositif d'alimentation en air de la chambre de mélange. Néanmoins, dans certains modes de réalisation avantageux d'un procédé et d'un dispositif selon l'invention ladite boucle de régulation thermique est distincte et indépendante de chaque dispositif d'alimentation en air de la chambre de mélange.

Par ailleurs, l'invention s'applique avec toutes les variantes de réalisation envisageables de dispositif(s) d'alimentation en air de la chambre de mélange. Cela étant, dans certains modes de réalisation avantageux selon l'invention, chaque dispositif d'alimentation en air de la chambre de mélange est un dispositif à cycle à air, c'est-à-dire comportant au moins une machine à cycle à air. Une telle machine à cycle à air comporte au moins un compresseur et au moins une turbine. Au moins un échangeur de chaleur intermédiaire est interposé entre un compresseur et une turbine d'une telle machine à cycle à air. Avantageusement, une boucle d'extraction d'eau est prévue à l'aval de la turbine d'une telle machine à cycle à air. Au moins un moteur électrique peut être associé à un compresseur d'une telle machine à cycle à air.

En outre, la température de l'air délivré à la chambre de mélange par chaque dispositif d'alimentation en air peut être contrôlée en fonction d'au moins une température de consigne pour au moins une cabine du véhicule -notamment selon une température de consigne pour chaque cabine du véhicule-. Une telle température de consigne pour au moins une cabine du véhicule utilisée pour le contrôle de la température de l'air délivré à la chambre de mélange peut être en particulier choisie parmi une température de consigne de l'air à l'intérieur d'une cabine du véhicule, une température de consigne de l'air alimentant une cabine du véhicule, une température de consigne de l'air à l'intérieur de plusieurs cabines du véhicule, une température de consigne de l'air alimentant plusieurs cabines du véhicule, et des valeurs déterminées à partir de plusieurs de ces températures de consigne (notamment une valeur moyenne d'une pluralité de ces température de consigne).

Ce contrôle de la température de l'air délivré à la chambre de mélange par chaque dispositif d'alimentation en air peut être réalisé par un automatisme de gestion thermique -notamment selon une régulation en boucle fermée-. Un tel automatisme de gestion thermique prend en considération également les différents débits d'air pouvant être introduits dans la chambre de mélange, notamment des débits d'air de recirculation en provenance de l'une et/ou l'autre des cabines du véhicule. Un tel automatisme de gestion thermique est avantageusement adapté pour réguler au moins la température de l'air en sortie de la chambre de mélange en fonction d'au moins un critère prédéterminé de régulation, notamment au moins une température de consigne pour au moins une cabine du véhicule.

Dans un procédé et un dispositif selon l'invention, la température de l'air alimenté dans au moins une cabine -notamment dans chaque cabine- peut être ajustée individuellement, c'est-à-dire indépendamment de la température de l'air alimentant les autres cabines, et ce grâce à au moins un simple échangeur de chaleur alimenté en fluide caloporteur à une température appropriée.

Rien n'empêche de prévoir qu'au moins une conduite d'alimentation propre à une cabine alimente directement la cabine en air en provenance de la chambre de mélange, sans échangeur individuel intermédiaire. Par exemple, une cabine présentant des besoins en apport thermique les plus faibles peut être directement alimentée en air en provenance de la chambre de mélange, l'ajustement individuel de la température de l'air alimentant cette cabine n'étant pas nécessaire.

Cela étant, dans certains modes de réalisation d'un procédé selon l'invention, chaque cabine de ladite pluralité de cabines est alimentée en air à une température susceptible d'être ajustée par au moins un échangeur individuel associé à ladite conduite d'alimentation propre à cette cabine. De même, dans un dispositif selon l'invention au moins un échangeur individuel est associé à chaque conduite d'alimentation propre à une cabine.

Par ailleurs, rien n'empêche de prévoir que la température de l'air alimentant au moins une cabine soit ajustée individuellement uniquement dans un sens par rapport à la température de l'air en provenance de la chambre de mélange, par exemple en mode refroidissement uniquement dans le sens d'une diminution de température, ou uniquement dans le sens d'une augmentation de température en mode chauffage. Cela étant, dans certains modes de réalisation préférentiels de l'invention, la température dudit fluide caloporteur est choisie de façon à pouvoir ajuster individuellement la température de l'air alimentant ladite cabine soit dans le sens d'une diminution de température, soit dans le sens d'une augmentation de température par rapport à la température de l'air en provenance de la chambre de mélange. Ainsi, avantageusement et selon l'invention ledit fluide caloporteur est sélectionné parmi :
- au moins un fluide -notamment au moins un liquide- caloporteur prélevé sur une boucle de régulation thermique du véhicule à une température supérieure à la température de l'air en provenance de la chambre de mélange, lorsque ladite température de consigne pour ladite cabine est supérieure à la température de l'air en provenance de la chambre de mélange,
- au moins un fluide -notamment au moins un liquide- caloporteur prélevé sur une boucle de régulation thermique du véhicule à une température inférieure à la température de l'air en provenance de la chambre de mélange, lorsque ladite température de consigne pour ladite cabine est inférieure à la température de l'air en provenance de la chambre de mélange.

Ladite température de l'air en provenance de la chambre de mélange peut être choisie parmi une température mesurée dans la chambre de mélange par au moins un capteur de température, et une température déterminée par calcul -notamment par ledit automatisme de gestion thermique-.

En outre, dans certains modes de réalisation selon l'invention, chaque dispositif d'alimentation en air de la chambre de mélange et ledit fluide caloporteur sont choisis et adaptés pour que la température dudit fluide caloporteur et ladite température de l'air en provenance de la chambre de mélange soit différentes l'une de l'autre, notamment diffèrent l'une de l'autre en valeur absolue d'une valeur de différence supérieure à une valeur seuil prédéterminée. Cette valeur seuil prédéterminée est choisie en particulier pour assurer des échanges thermiques suffisants entre les deux circuits de chaque échangeur individuel, et est avantageusement supérieure à 1° C, en particulier comprise entre 2° C et 10° C, par exemple de l'ordre de 5° C. Ainsi, dans ces modes de réalisation, ledit automatisme de gestion thermique est adapté pour contrôler la température de l'air délivré à la chambre de mélange par chaque dispositif d'alimentation en air, et l'alimentation de chaque deuxième circuit alimenté en fluide caloporteur pour que ledit fluide caloporteur soit alimenté dans le deuxième circuit à une température présentant une différence avec la température de l'air en provenance de la chambre de mélange qui est supérieure, en valeur absolue, à ladite valeur seuil prédéterminée.

Ledit automatisme de gestion thermique est ainsi adapté pour commander d'une part chaque dispositif d'alimentation en air de la chambre de mélange, d'autre part l'alimentation de chaque deuxième circuit de chaque échangeur individuel par un fluide caloporteur prélevé sur une boucle de régulation thermique du véhicule, à condition que ce fluide caloporteur soit à une température ayant une différence supérieure à ladite valeur seuil prédéterminée par rapport à la température de l'air en provenance de la chambre de mélange. Cet écart minimal de température entre l'air à la sortie de la chambre de mélange et le fluide caloporteur alimenté dans chaque échangeur individuel permet en pratique d'assurer un contrôle thermique efficace, sans risque d'instabilité.

Rien n'empêche d'associer plusieurs échangeurs individuels à une même conduite d'alimentation propre à une cabine. Par exemple il est possible de prévoir pour une même conduite d'alimentation propre à une cabine un premier échangeur individuel adapté pour recevoir un fluide caloporteur à une température supérieure à la température de l'air en provenance de la chambre de mélange de façon à augmenter la température de l'air alimentant la cabine par rapport à la température de l'air en provenance de la chambre de mélange, et un deuxième échangeur individuel adapté pour recevoir un fluide caloporteur à une température inférieure à la température de l'air en provenance de la chambre de mélange de façon à diminuer la température de l'air alimentant la cabine par rapport à la température de l'air en provenance de la chambre de mélange. Il est également possible de prévoir plusieurs échangeurs individuels associés à une même conduite d'alimentation, en particulier au moins un premier échangeur individuel adapté pour réaliser un ajustement grossier de température (le deuxième circuit d'un tel premier échangeur individuel étant alimenté en fluide caloporteur dont les caractéristiques sont adaptées pour réaliser un tel ajustement grossier de température), et au moins un deuxième échangeur individuel adapté pour réaliser un ajustement fin de température (le deuxième circuit d'un tel premier échangeur individuel étant alimenté en fluide caloporteur dont les caractéristiques sont adaptées pour réaliser un tel ajustement fin de température). Il est également possible de prévoir plusieurs échangeurs individuels similaires associés à une même conduite d'alimentation à des fins de redondance, pour pallier une éventuelle panne de l'un de ces échangeurs individuels.

Cela étant, dans certains modes de réalisation préférentiels, au plus un échangeur individuel est associé à chaque conduite d'alimentation propre à une cabine.

Dans certains modes de réalisation possibles, ledit deuxième circuit d'un tel unique échangeur individuel associé à une conduite d'alimentation propre à cabine peut être alimenté par un fluide caloporteur en provenance d'un unique prélèvement d'une unique boucle de régulation thermique du véhicule, c'est-à-dire à une unique température, l'ajustement de la température de l'air alimentant la cabine n'étant possible que dans un sens de variation de température, soit une diminution de température, soit une augmentation de température par rapport à la température de l'air en provenance de la chambre de mélange. Cela étant, de préférence, ledit deuxième circuit de chaque unique échangeur individuel associé à une conduite d'alimentation propre à cabine est alimenté en fluide caloporteur par des moyens d'alimentation sélective à partir d'un prélèvement choisi parmi une pluralité de prélèvements d'au moins une boucle de régulation thermique du véhicule. Ladite pluralité de prélèvements peut être constituée de plusieurs prélèvements sur une même boucle de régulation thermique du véhicule, ou au contraire peut comporter au moins plusieurs prélèvements réalisés sur plusieurs boucles de régulation thermique distinctes du véhicule.

Avantageusement dans certains modes de réalisation selon l'invention, le deuxième circuit de chaque échangeur individuel associé à une conduite d'alimentation propre à une cabine est lui-même individuellement alimenté en fluide caloporteur par des moyens d'alimentation qui lui sont propres, c'est-à-dire indépendamment de l'alimentation en fluide caloporteur de chaque autre deuxième circuit de chaque échangeur individuel associé à la même conduite d'alimentation ou à une autre conduite d'alimentation (propre à une autre cabine). Cela étant, il est possible de prévoir des moyens d'alimentation communs à plusieurs deuxièmes circuits de plusieurs échangeurs individuels associés à une même conduite d'alimentation propre à une même cabine, ou communs à plusieurs deuxièmes circuits de plusieurs échangeurs individuels associés respectivement à plusieurs conduites d'alimentation distinctes propres à plusieurs cabines distinctes. Par exemple, les deuxièmes circuits de plusieurs échangeurs individuels d'ajustement grossier associés à des conduites d'alimentation distinctes peuvent être alimentés par des moyens d'alimentation communs, c'est-à-dire par une même vanne multivoies, et donc par un même fluide caloporteur.

Dans certains modes de réalisation conformes à l'invention, ces moyens d'alimentation de chaque deuxième circuit en fluide caloporteur sont constitués d'une vanne multivoies -notamment d'une vanne trois voies- commandée par ledit automatisme de gestion thermique. Ainsi, avantageusement dans un procédé selon l'invention chaque deuxième circuit est alimenté en fluide caloporteur par l'intermédiaire d'une vanne multivoies -notamment d'une vanne trois voies- présentant une sortie reliée au deuxième circuit, une première entrée reliée à un premier prélèvement de fluide caloporteur d'une boucle de régulation thermique du véhicule et au moins une deuxième entrée -notamment une unique deuxième entrée- reliée à un deuxième prélèvement de fluide caloporteur d'une boucle de régulation thermique du véhicule, le deuxième prélèvement étant adapté pour pouvoir délivrer du fluide caloporteur à une température différente de la température du fluide caloporteur pouvant être délivré par le premier prélèvement. En outre, avantageusement et selon l'invention chaque deuxième circuit est alimenté en fluide caloporteur par l'intermédiaire d'une vanne multivoies -notamment d'une vanne trois voies- reliée à au moins deux prélèvements distincts -notamment à deux prélèvements distincts- d'un même fluide caloporteur à des températures distinctes d'une même boucle de régulation thermique du véhicule.

Dans un dispositif selon ces modes de réalisation de l'invention chaque deuxième circuit est relié à au moins une boucle de régulation thermique du véhicule par l'intermédiaire d'une vanne multivoies -notamment d'une vanne trois voies- présentant une sortie reliée au deuxième circuit, une première entrée reliée à un premier prélèvement de fluide caloporteur d'une boucle de régulation thermique du véhicule et au moins une deuxième entrée -notamment une unique deuxième entrée-reliée à un deuxième prélèvement de fluide caloporteur d'une boucle de régulation thermique du véhicule, le deuxième prélèvement étant adapté pour pouvoir délivrer du fluide caloporteur à une température différente de la température du fluide caloporteur pouvant être délivré par le premier prélèvement. En outre, avantageusement et selon l'invention le premier prélèvement et chaque deuxième prélèvement sont des prélèvements distincts d'une même boucle de régulation thermique du véhicule.

En particulier, dans certains modes de réalisation, au moins une -notamment chaque- vanne multivoies est une vanne trois voies présentant une première entrée reliée à un premier prélèvement de fluide caloporteur et une deuxième entrée reliée à un deuxième prélèvement de fluide caloporteur, et une sortie reliée à l'une ou l'autre de ses deux entrées.

Dans certains modes de réalisation, avantageusement et selon l'invention, chaque vanne multivoies -notamment chaque vanne trois voies- est commandée selon un mode de commande dit à l'alternat, c'est-à-dire de telle sorte que, en position ouverte de la vanne, sa sortie est reliée à l'une ou l'autre de ses entrées, et à une seule de ses entrées. Ainsi, en position ouverte, la vanne délivre tout ou une partie du débit entrant dans l'une ou l'autre seulement de ses entrées. Il est à noter cependant que chaque vanne multivoies est de préférence une vanne proportionnelle, c'est-à-dire que, en position ouverte, le débit délivré par la sortie peut être ajusté selon la position d'ouverture de la vanne. En position fermée, la vanne ne délivre aucun débit.

Avantageusement et selon l'invention, le premier prélèvement et le deuxième prélèvement sont deux prélèvements distincts d'un même fluide caloporteur à deux températures distinctes d'une même boucle de régulation thermique du véhicule. En effet, un fluide caloporteur à basse température et un fluide caloporteur à haute température sont suffisants pour ajuster individuellement la température de l'air alimentant une cabine.

Cela étant, rien n'empêche en variante de prévoir que chaque deuxième circuit puisse être alimenté par plus de deux prélèvements distincts de fluide caloporteur, c'est-à-dire à plus de deux températures différentes, en provenance d'une seule et même boucle de régulation thermique du véhicule, ou au contraire de plusieurs boucles distinctes de régulation thermique du véhicule. Cette variante permet en particulier de maintenir le contrôle thermique des cabines en cas d'indisponibilité d'un prélèvement de fluide caloporteur sur une boucle de régulation thermique, soit à cause d'un dysfonctionnement sur cette boucle de régulation thermique, soit plus généralement pour éviter un tel prélèvement au détriment des performances de la boucle de régulation thermique (par exemple dans certaines conditions d'utilisation du véhicule, notamment dans certains domaines de vol lorsqu'il s'agit d'un aéronef).

En particulier, dans certains modes de réalisation de l'invention, chaque boucle de régulation thermique du véhicule peut avantageusement être une boucle de régulation thermique à fluide caloporteur monophasique (c'est-à-dire qui reste dans le même état physique (liquide ou gazeux) en tout point de la boucle). Un tel fluide caloporteur monophasique peut en particulier être choisi parmi un liquide caloporteur et l'air.

Dans certains modes de réalisation avantageux de l'invention, au moins une boucle de régulation thermique dont le fluide caloporteur est utilisé pour alimenter au moins un échangeur individuel peut en particulier être une boucle de refroidissement d'équipements électroniques du véhicule, par exemple de circuits électroniques de puissance. Il est à noter que rien n'empêche de prévoir que plusieurs -notamment tous- les deuxièmes circuits de plusieurs -notamment de tous- les échangeurs individuels soient alimentés à partir d'une seule et même boucle de régulation thermique du véhicule. Cela étant, rien n'empêche de prévoir au moins un échangeur individuel dont le deuxième circuit est alimenté par un premier fluide caloporteur à partir d'une première boucle de régulation thermique, et au moins un autre échangeur individuel dont le deuxième circuit est alimenté par un deuxième fluide caloporteur à partir d'une deuxième boucle de régulation thermique distincte de ladite première boucle de régulation thermique.

L'ajustement individuel de la température dans un sens comme dans l'autre (réchauffage ou refroidissement individuel à partir de la température de l'air délivré par la chambre de mélange) de l'air alimentant chaque cabine du véhicule dans un procédé et un dispositif selon l'invention permet en pratique d'optimiser la consommation énergétique induite par le contrôle thermique des différentes cabines du véhicule. La logique mise en œuvre pour contrôler la température de l'air dans la chambre de mélange et réaliser cet ajustement individuel de température peut faire l'objet de très nombreuses variantes de réalisation.

Par exemple, dans certains modes de réalisation possibles de l'invention, la température de l'air délivré à la chambre de mélange par chaque dispositif d'alimentation en air est déterminée en fonction d'une valeur minimum des besoins en apport thermique des différentes cabines du véhicule. Cette valeur minimum peut en particulier être déterminée par la plus faible différence, en valeur absolue, entre au moins une température d'air mesurée pour une cabine et ladite température de consigne pour cette cabine. Dans les modes de réalisation correspondants d'un dispositif selon l'invention ledit automatisme de gestion thermique est adapté pour déterminer une valeur minimum des besoins en apport thermique des différentes cabines du véhicule, et pour contrôler la température de l'air délivré à la chambre de mélange par chaque dispositif d'alimentation en air en fonction de cette valeur minimum. En particulier, chaque cabine étant dotée d'au moins un capteur de mesure d'une température d'air pour cette cabine, ledit automatisme de gestion thermique est adapté pour contrôler la température de l'air délivré à la chambre de mélange par chaque dispositif d'alimentation en air en fonction de la plus faible différence, en valeur absolue, entre une température mesurée pour une cabine et ladite température de consigne pour cette cabine.

Ladite température d'air mesurée pour chaque cabine utilisée pour déterminer ladite plus faible différence, c'est-à-dire la cabine ayant le plus faible besoin en apport thermique, peut être choisie parmi une température de l'air alimentant ladite cabine et une température de l'air à l'intérieur de ladite cabine. Lorsque ladite température de consigne pour la cabine est une température de consigne de l'air alimentant la cabine, ladite température d'air mesurée est aussi la température de l'air alimentant cette cabine. Lorsque ladite température de consigne pour la cabine est une température de consigne de l'air à l'intérieur de la cabine, ladite température d'air mesurée est aussi la température mesurée à l'intérieur de la cabine.

D'autres variantes sont possibles, par exemple en contrôlant la température de l'air délivré à la chambre de mélange par chaque dispositif d'alimentation en air en fonction d'une valeur moyenne de besoins en apport thermique de différentes cabines et/ou en fonction d'une valeur moyenne de température de consigne pour différentes cabines et/ou en fonction de valeurs moyennes de température mesurée pour différentes cabines.

L'air en sortie de la chambre de mélange permet ainsi de contrôler, sans ajustement individuel, la température de cette cabine nécessitant l'apport thermique le plus faible, c'est-à-dire présentant la plus faible différence, en valeur absolue, entre ladite température mesurée pour la cabine et ladite température de consigne pour cette cabine. La température de l'air alimentant une telle cabine nécessitant l'apport thermique le plus faible n'a pas à être ajustée individuellement, de sorte que si cette cabine est alimentée par l'intermédiaire d'un échangeur individuel, l'alimentation du deuxième circuit de cet échangeur individuel peut être fermée, aucun fluide caloporteur ne circulant dans ce deuxième circuit. Dans certains modes de réalisation, la conduite d'alimentation propre à cette cabine nécessitant l'apport thermique plus faible peut être exempte d'échangeur individuel, si cette cabine est toujours la même quelles que soient les conditions de fonctionnement du véhicule.

L'invention s'étend également à un véhicule -notamment à un aéronef- comprenant au moins une pluralité de cabines, au moins un dispositif de contrôle thermique de chaque pluralité de cabines et au moins une boucle de régulation thermique à fluide caloporteur, caractérisé en ce qu'il comporte au moins un dispositif de contrôle thermique selon l'invention. Elle s'étend également à un véhicule dans lequel un procédé de contrôle thermique selon l'invention est mis en œuvre.

L'invention concerne également un procédé de contrôle thermique, un dispositif de contrôle thermique et un véhicule caractérisés en combinaison par tout ou partie des caractéristiques mentionnées ci-dessus ou ci-après.

D'autres buts, caractéristiques et avantages de l'invention apparaîtront à la lecture de la description suivante donnée à titre d'exemple illustratif non limitatif et qui se réfère aux figures annexées dans lesquelles :
- la figure 1 est un schéma représentant un exemple de réalisation d'un dispositif de contrôle thermique selon l'invention,
- la figure 2 est un exemple d'algorithme général mis en œuvre dans un procédé conforme à l'invention,
- la figure 3 est un exemple d'algorithme mis en œuvre dans un procédé conforme à l'invention pour alimenter un deuxième circuit d'un échangeur individuel.

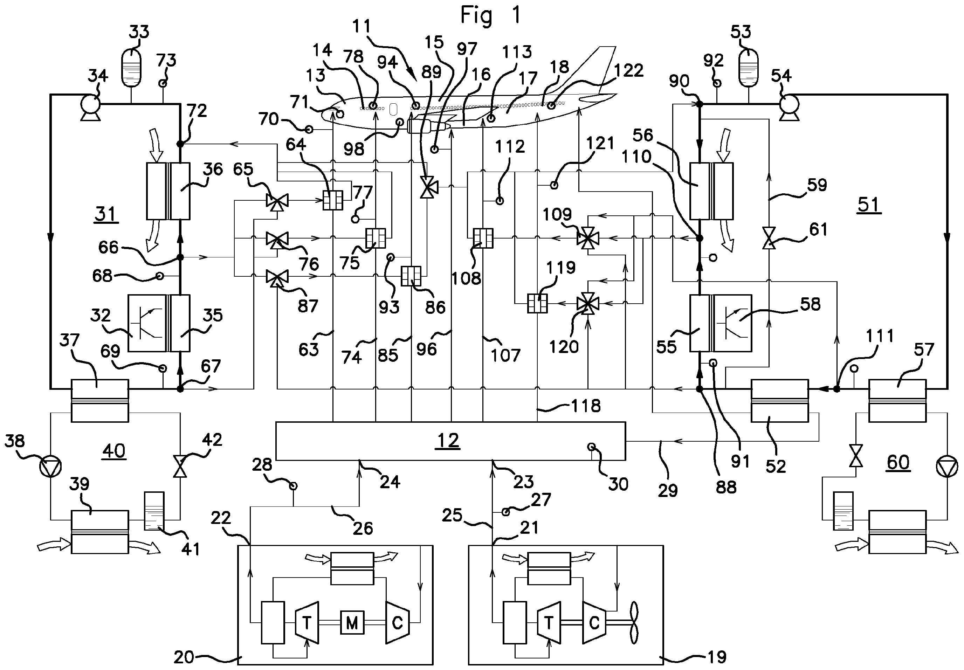

Un exemple de dispositif de contrôle thermique selon l'invention d'un aéronef 11 est représenté figure 1. Ce dispositif comprend une chambre de mélange 12 alimentée par différents flux d'air, cette chambre de mélange 12 permettant d'alimenter individuellement différentes cabines 13 à 18 de l'aéronef 11 par différents flux d'air.

La chambre de mélange 12 est alimentée en particulier par deux dispositifs 19, 20 d'alimentation en air à température contrôlée, chacun de ces dispositifs 19, 20 d'alimentation en air étant par exemple un module de contrôle environnemental (ECS) à machine à cycle à air. Chaque dispositif 19, 20 d'alimentation en air présente une sortie 21, respectivement 22 reliée à une entrée 23, respectivement 24 de la chambre de mélange 12 par une conduite 25, respectivement 26, dotée d'un capteur de température 27, respectivement 28 de l'air délivré à la sortie 21,22.

Dans l'exemple représenté, un premier dispositif 19 comprend un turbocompresseur comprenant un compresseur accouplé à une turbine et à un ventilateur, le compresseur recevant de l'air en provenance de l'environnement extérieur et/ou de toute autre source d'air disponible, le comprimant pour le délivrer à un échangeur intermédiaire dans lequel il est refroidi avant son passage dans une boucle d'extraction d'eau, puis à l'entrée de la turbine, cette dernière délivrant, en mode refroidissement, un flux d'air refroidi à la chambre de mélange 12. En mode de chauffage, le flux d'air comprimé réchauffé fourni par le compresseur peut être directement délivré à la sortie du dispositif 19 dans la chambre de mélange 12. Le deuxième dispositif 20 d'alimentation en air à température contrôlée représenté est similaire au premier dispositif 19, à l'exception du fait qu'un moteur électrique est interposé entre le compresseur et la turbine pour pouvoir entraîner cette dernière.

Il va de soi que toutes autres variantes de réalisation de tels dispositifs d'alimentation en air à température contrôlée peuvent être utilisées dans le cadre de la présente invention. En particulier, rien n'empêche de prévoir un (ou plusieurs) dispositif(s) d'alimentation en air fonctionnant uniquement en mode chauffage (par exemple un moteur de compresseur ou une pompe à chaleur) et/ou un (ou plusieurs) dispositif(s) d'alimentation en air fonctionnant uniquement en mode refroidissement (c'est-à-dire pour la climatisation de l'air) et/ou un (ou plusieurs) dispositif(s) d'alimentation en air comprenant au moins une boucle de régulation thermique à fluide caloporteur diphasique (liquide/vapeur) et/ou un (ou plusieurs) dispositif(s) d'alimentation en air comprenant au moins une boucle de régulation thermique à liquide caloporteur monophasique.

Chaque dispositif 19, 20 d'alimentation en air à température contrôlée est commandé par un automatisme de gestion thermique (non représenté) recevant les signaux délivrés par chaque capteur de mesure de température et comprenant notamment en général un asservissement de la température de l'air à la sortie du dispositif 19, 20 en fonction d'une température requise, déterminée par ailleurs par l'automatisme de gestion thermique. Les caractéristiques générales d'un tel automatisme de gestion thermique (formé d'un ordinateur de bord du véhicule et de ses différentes interfaces avec les composants qu'il contrôle : vannes, capteurs de température, moteurs, compresseurs, pompes...) et ses différents modes de programmation possibles sont bien connus en eux-mêmes et non pas à être décrits en détail, seules ses caractéristiques propres à la présente invention étant décrites ci-après.

La chambre de mélange 12 est également alimentée en général par de l'air de recirculation en provenance d'au moins l'une des cabines 13 à 18 par au moins une conduite 29 de recirculation. Elle peut également être alimentée par tout autre flux d'air disponible à bord de l'aéronef 11 et notamment par tout autre flux d'air permettant une récupération d'énergie thermique et/ou éventuellement par de l'air frais en provenance de l'extérieur.

Un capteur 30 de température relié à l'automatisme de gestion thermique permet de mesurer la température de l'air de mélange à l'intérieur de la chambre de mélange 12.

L'aéronef 11 comprend par ailleurs au moins une boucle 31, 51 de régulation thermique à liquide caloporteur monophasique, agencée et adaptée pour le contrôle thermique d'équipements embarqués à bord de l'aéronef 11 autres que les cabines 13 à 18 proprement dites. Une telle boucle de régulation thermique à liquide caloporteur monophasique est en général distincte de chaque dispositif 19, 20 d'alimentation en air à température contrôlée et indépendante de ces dispositifs 19, 20 d'alimentation en air, en ce sens qu'elle ne constitue ni une source chaude ni une source froide pour ces dispositifs 19, 20.

Dans l'exemple représenté, l'aéronef 11 comprend deux boucles 31, 51 de régulation thermique à liquide caloporteur monophasique.

Une première boucle 31 comprend un réservoir 33 de liquide caloporteur, une pompe 34, un échangeur de chaleur, dit échangeur 35 de refroidissement, associé à une source chaude 32 à refroidir constituée par exemple d'équipements embarqués électroniques de puissance, et deux sources froides permettant de refroidir le liquide caloporteur, à savoir un échangeur 36 de chaleur dit échangeur de peau, c'est-à-dire recevant de l'air extérieur au véhicule (par exemple de l'air RAM à pression dynamique sous l'effet du déplacement du véhicule), et un échangeur 37 de chaleur faisant office d'évaporateur dans une boucle 40 de régulation thermique à fluide caloporteur diphasique (VCS).

Cette boucle 40 à cycle diphasique comprend par exemple un compresseur 38 fournissant le fluide à l'état gazeux à un échangeur 39 de chaleur faisant office de condenseur, par exemple associé à de l'air extérieur au véhicule à titre de source froide, un réservoir 41 de fluide et une vanne 42 de détente alimentant l'évaporateur 37, dont la sortie alimente le compresseur 38. Il va de soi qu'une telle boucle 40 à cycle diphasique peut faire l'objet de nombreuses variantes de réalisation.

La deuxième boucle 51 de régulation thermique à liquide caloporteur monophasique est similaire à la première boucle 31 mais comporte une source froide supplémentaire sous forme d'un échangeur de chaleur, dit échangeur 52 de recirculation, associé à la conduite 29 de recirculation pour refroidir l'air de recirculation en provenance d'au moins une cabine de l'aéronef 11 avant son alimentation dans la chambre de mélange 12.

Cette deuxième boucle 51 de régulation thermique liquide caloporteur monophasique comprend un réservoir 53 de liquide caloporteur, une pompe 54, un échangeur de chaleur, dit échangeur 55 de refroidissement, associé à une source chaude 58 à refroidir constituée par exemple d'équipements embarqués électroniques de puissance, et trois sources froides permettant de refroidir le liquide caloporteur, à savoir, outre l'échangeur 52 de recirculation, un échangeur 56 de chaleur, dit échangeur 56 de peau, c'est-à-dire recevant de l'air extérieur au véhicule (par exemple de l'air RAM à pression dynamique sous l'effet du déplacement du véhicule), et un échangeur 57 de chaleur faisant office d'évaporateur dans une boucle 60 de régulation thermique à fluide caloporteur diphasique (VCS).

Cette boucle 60 à cycle diphasique est similaire à la boucle 40 à cycle diphasique associée à la première boucle 31 de régulation thermique à liquide caloporteur monophasique.

En outre, une conduite 59 de contournement permet de relier directement la sortie de l'échangeur 52 de recirculation à l'amont de la pompe 54, au moins une partie du débit du liquide caloporteur monophasique ne circulant pas dans l'échangeur 55 de refroidissement ni dans l'échangeur 56 de peau. Une vanne 61 commandée par l'automatisme de gestion thermique est interposée sur cette conduite 59 de contournement pour ajuster le débit du liquide passant dans la conduite 59 de contournement. Cette conduite 59 de contournement permet d'éviter que le débit du liquide dans l'échangeur 55 de refroidissement ne soit trop élevé, compte tenu du fait que par ailleurs le débit de liquide nécessaire à l'échangeur 52 de recirculation est en général plus élevé que celui nécessaire dans l'échangeur 55 de refroidissement.

Une première cabine 13 (par exemple le cockpit de l'aéronef 11) est reliée à la chambre de mélange 12 par une conduite 63 d'alimentation en air propre à cette cabine 13 par l'intermédiaire d'un premier circuit d'un échangeur de chaleur air/liquide, dit échangeur 64 individuel. Tout échangeur de chaleur permet un transfert de chaleur entre son premier circuit et son deuxième circuit, selon la différence de température des flux traversant respectivement ces deux circuits. L'échangeur 64 individuel présente ainsi un deuxième circuit alimenté à partir d'une vanne 65 trois voies par du liquide caloporteur prélevé sur la première boucle 31 de régulation thermique à liquide caloporteur monophasique.

La vanne 65 trois voies est commandée par l'automatisme de gestion thermique et présente une première entrée reliée à un premier nœud 66 de prélèvement chaud de la boucle 31 à l'aval de l'échangeur 35 de refroidissement permettant de prélever le liquide caloporteur à une température relativement élevée. La vanne 65 trois voies présente une deuxième entrée reliée à un deuxième nœud 67 de prélèvement froid à l'amont de l'échangeur 35 de refroidissement permettant de prélever le liquide caloporteur à une température relativement basse.

La vanne 65 trois voies présente une sortie reliée à l'entrée du deuxième circuit de l'échangeur 64 individuel. La sortie de ce deuxième circuit est reliée à un nœud 72 de la première boucle 31 de régulation thermique pour recycler le liquide caloporteur dans cette boucle, de préférence immédiatement à l'amont de la pompe 34. Un capteur 73 de température permet de mesurer la température à ce nœud 72.

Ainsi, le deuxième circuit de l'échangeur 64 individuel peut être alimenté, sur commande de l'automatisme de gestion thermique, soit par du liquide caloporteur à haute température pour réchauffer l'air alimenté à la cabine 13, soit par du liquide caloporteur à basse température pour refroidir l'air alimenté à la cabine 13. Un capteur 68 de température permet de mesurer la température du liquide au premier nœud 66. Un capteur 69 de température permet de mesurer la température au deuxième nœud 67. Un capteur 70 de température permet de mesurer la température de l'air à l'entrée de la première cabine 13 et un capteur 71 de température permet de mesurer la température intérieure de la première cabine 13.

L'automatisme de gestion thermique commande en particulier la vanne 65 trois voies en fonction de la température de l'air dans la chambre de mélange 12 mesurée par le capteur 30, des différentes mesures de température délivrées par les différents capteurs de température et d'une température de consigne ajustée par l'équipage de l'aéronef 11, par exemple à partir d'un thermostat propre à la première cabine 13.

Une deuxième cabine 14 qui est par exemple une cabine de passagers est reliée à la chambre de mélange 12 par une conduite 74 d'alimentation en air propre à cette cabine 14 par l'intermédiaire d'un premier circuit d'un échangeur de chaleur air/liquide, dit échangeur 75 individuel. L'échangeur 75 individuel présente un deuxième circuit alimenté, comme l'échangeur 64 air/liquide de la conduite 63 d'alimentation propre la première cabine 13, à partir d'une vanne 76 trois voies par du liquide caloporteur également prélevé sur la première boucle 31 de régulation thermique à liquide caloporteur monophasique. La vanne 76 trois voies est commandée par l'automatisme de gestion thermique, et présente une première entrée reliée au premier nœud 66 de prélèvement chaud de la boucle 31 et une deuxième entrée reliée au deuxième nœud 67 de prélèvement froid, permettant de prélever le liquide caloporteur soit à température relativement élevée, soit à température relativement basse.

La vanne 76 trois voies présente une sortie reliée à l'entrée du deuxième circuit de l'échangeur 75 individuel. La sortie de ce deuxième circuit est reliée au nœud 72 de la première boucle 31 de régulation thermique pour recycler le liquide caloporteur dans cette boucle.

Un capteur 77 de température permet de mesurer la température de l'air à l'entrée de la deuxième cabine 14 et un capteur 78 de température permet de mesurer la température intérieure de la deuxième cabine 14. L'automatisme de gestion thermique commande en particulier la vanne 76 trois voies en fonction de la température de l'air dans la chambre de mélange 12 mesurée par le capteur 30, des différentes mesures de température délivrées par les différents capteurs de température et d'une température de consigne ajustée par l'équipage de l'aéronef 11, par exemple à partir d'un thermostat propre à la deuxième cabine 14.

Une troisième cabine 15 qui est par exemple également une cabine de passagers est reliée à la chambre de mélange 12 par une conduite 85 d'alimentation en air propre à cette cabine 15 par l'intermédiaire d'un premier circuit d'un échangeur de chaleur air/liquide, dit échangeur 86 individuel. L'échangeur 86 individuel présente un deuxième circuit alimenté à partir d'une vanne 87 trois voies par du liquide caloporteur prélevé soit sur la première boucle 31 de régulation thermique à liquide caloporteur monophasique, soit sur la deuxième boucle 51 de régulation thermique à liquide caloporteur monophasique. La vanne 87 trois voies est commandée par l'automatisme de gestion thermique, et présente une première entrée reliée au premier nœud 66 de prélèvement chaud de la première boucle 31 à l'aval de l'échangeur 35 de refroidissement permettant de prélever le liquide caloporteur à une température relativement élevée. La vanne 87 trois voies présente une deuxième entrée reliée à un deuxième noeud 88 de prélèvement froid de la deuxième boucle 51 à l'amont de l'échangeur 55 de refroidissement permettant de prélever le liquide caloporteur à une température relativement basse. Ainsi, le deuxième circuit de l'échangeur 86 individuel est alimenté tantôt par du liquide à haute température à partir de la première boucle 31 et tantôt par du liquide à basse température par la deuxième boucle 51. En effet, cette deuxième boucle 51 présente des capacités de refroidissement supérieures, qui peuvent être utilisées dans un plus grand nombre d'échangeurs individuels que la première boucle 31 pour ajuster la température de chaque cabine de l'aéronef 11 en mode refroidissement.

La vanne 87 trois voies présente une sortie reliée à l'entrée du deuxième circuit de l'échangeur 64 individuel. La sortie de ce deuxième circuit est reliée par une vanne 89 trois voies de sortie soit au nœud 72 de la première boucle 31 de régulation thermique pour recycler le liquide caloporteur dans cette boucle 31, soit à un nœud 90 de la deuxième boucle 51 de régulation thermique pour recycler le liquide caloporteur dans cette boucle 51. L'automatisme de gestion thermique commande la vanne 89 trois voies de sortie pour recycler le liquide caloporteur dans la première boucle 31 de régulation thermique lorsque celui-ci est prélevé sur cette première boucle 31, et dans la deuxième boucle 51 de régulation thermique lorsque le liquide caloporteur est prélevé à partir de cette deuxième boucle 51. Un capteur 91 de température permet de mesurer la température du liquide caloporteur au deuxième nœud 88 de prélèvement de la deuxième boucle 51. Un capteur 92 de température permet de mesurer la température au nœud 90 de la deuxième boucle 51 auquel la vanne 89 trois voies de sortie est reliée. Un capteur 93 de température permet de mesurer la température de l'air à l'entrée de la troisième cabine 15 et un capteur 94 de température permet de mesurer la température intérieure de la troisième cabine 15.

L'automatisme de gestion thermique commande en particulier les vans 87, 89 trois voies en fonction de la température de l'air dans la chambre de mélange 12 mesurée par le capteur 30, des différentes mesures de température délivrées par les différents capteurs de température et d'une température de consigne ajustée par l'équipage de l'aéronef 11, par exemple à partir d'un thermostat propre à la troisième cabine 15.

Une quatrième cabine 16, qui est par exemple une soute de l'aéronef 11, est reliée directement à la chambre de mélange 12 par une conduite 96 d'alimentation en air propre à cette cabine 16, de façon à être alimentée en air à la température de l'air sortant de la chambre de mélange 12. Cette conduite 96 d'alimentation en air est donc exempte d'échangeur air/liquide, la température de l'air délivré dans la quatrième cabine 16 n'ayant pas à être ajustée individuellement. De préférence, cette quatrième cabine 16 est la cabine de l'aéronef qui présente des besoins en apport thermique les plus faibles, aussi bien en termes de chauffage qu'en termes de refroidissement. Un capteur 97 de température permet de mesurer la température de l'air à l'entrée de la quatrième cabine 16. Un capteur 98 de température permet de mesurer la température à l'intérieur de la quatrième cabine 16. Ainsi, l'automatisme de gestion peut piloter les dispositifs 19, 20 d'alimentation de la chambre de mélange 12 en air à température contrôlée uniquement en fonction des besoins en apport thermique de cette quatrième cabine 16, de façon optimale vis-à-vis de la consommation énergétique de ces dispositifs 19, 20 d'alimentation en air. L'automatisme de gestion peut être ainsi adapté pour asservir la température à l'intérieur de la chambre de mélange 12 à une température de consigne dans cette quatrième cabine 16 ajustée par l'équipage de l'aéronef 11, par exemple à partir d'un thermostat propre à la quatrième cabine 16.

Une cinquième cabine 17, qui est par exemple une cabine de passagers, est reliée à la chambre de mélange 12 par une conduite 107 d'alimentation en air propre à cette cabine 17 par l'intermédiaire d'un premier circuit d'un échangeur de chaleur air/liquide, dit échangeur 108 individuel. L'échangeur 108 individuel présente un deuxième circuit alimenté à partir d'une vanne 109 quatre voies par du liquide caloporteur prélevé sur la deuxième boucle 51 de régulation thermique à liquide caloporteur monophasique. La vanne 109 quatre voies est commandée par l'automatisme de gestion thermique, et présente une première entrée reliée à un premier nœud 110 de prélèvement chaud de la deuxième boucle 51 à l'aval de l'échangeur 55 de refroidissement permettant de prélever le liquide caloporteur à une température relativement élevée. La vanne 109 quatre voies présente une deuxième entrée reliée au deuxième nœud 88 de prélèvement froid de la deuxième boucle 51 à l'amont de l'échangeur 55 de refroidissement permettant de prélever le liquide caloporteur à une température relativement basse. La vanne 109 quatre voies présente une troisième entrée reliée à un troisième nœud 111 de prélèvement à température intermédiaire de la deuxième boucle 51 entre l'évaporateur 57 et l'échangeur 52 de recirculation permettant de prélever le liquide caloporteur à une température intermédiaire entre celle du premier nœud 110 et celle du deuxième nœud 88.

La vanne 109 quatre voies présente une sortie reliée à l'entrée du deuxième circuit de l'échangeur 108 individuel. La sortie de ce deuxième circuit est reliée au nœud 90 de la deuxième boucle 51 de régulation thermique pour recycler le liquide caloporteur dans cette boucle 51.

Un capteur 112 de température permet de mesurer la température de l'air à l'entrée de la cinquième cabine 17 et un capteur 113 de température permet de mesurer la température intérieure de la cinquième cabine 17. L'automatisme de gestion thermique commande en particulier la vanne 109 quatre voies en fonction de la température de l'air dans la chambre de mélange 12 mesurée par le capteur 30, des différentes mesures de température délivrées par les différents capteurs de température et d'une température de consigne ajustée par l'équipage de l'aéronef 11, par exemple à partir d'un thermostat propre à la cinquième cabine 17.

Une sixième cabine 18, qui est par exemple une cabine de passagers, est reliée à la chambre de mélange 12 par une conduite 118 d'alimentation en air propre à cette cabine 18 par l'intermédiaire d'un premier circuit d'un échangeur de chaleur air/liquide, dit échangeur 119 individuel. L'échangeur 119 individuel présente un deuxième circuit alimenté à partir d'une vanne 120 quatre voies par du liquide caloporteur prélevé sur la deuxième boucle 51 de régulation thermique à liquide caloporteur monophasique. Cette vanne 120 quatre voies est commandée par l'automatisme de gestion et est reliée à la deuxième boucle 51 de régulation thermique comme la vanne 109 quatre voies alimentant l'échangeur 108 individuel de la cinquième cabine 17.

Un capteur 121 de température permet de mesurer la température de l'air à l'entrée de la sixième cabine 18 et un capteur 122 de température permet de mesurer la température intérieure de la sixième cabine 18. L'automatisme de gestion thermique commande en particulier la vanne 120 quatre voies en fonction de la température de l'air dans la chambre de mélange 12 mesurée par le capteur 30, des différentes mesures de température délivrées par les différents capteurs de température et d'une température de consigne ajustée par l'équipage de l'aéronef 11, par exemple à partir d'un thermostat propre à la sixième cabine 18.

Chaque échangeur individuel est choisi notamment en fonction de la nature du fluide caloporteur alimentant le deuxième circuit de cet échangeur individuel. Il peut s'agir d'un échangeur air/air tel que décrit par exemple par US3601185 ou autre ; ou d'un échangeur air/liquide tel que décrit par exemple par EP 0440400 ou US4327802 ou autre.

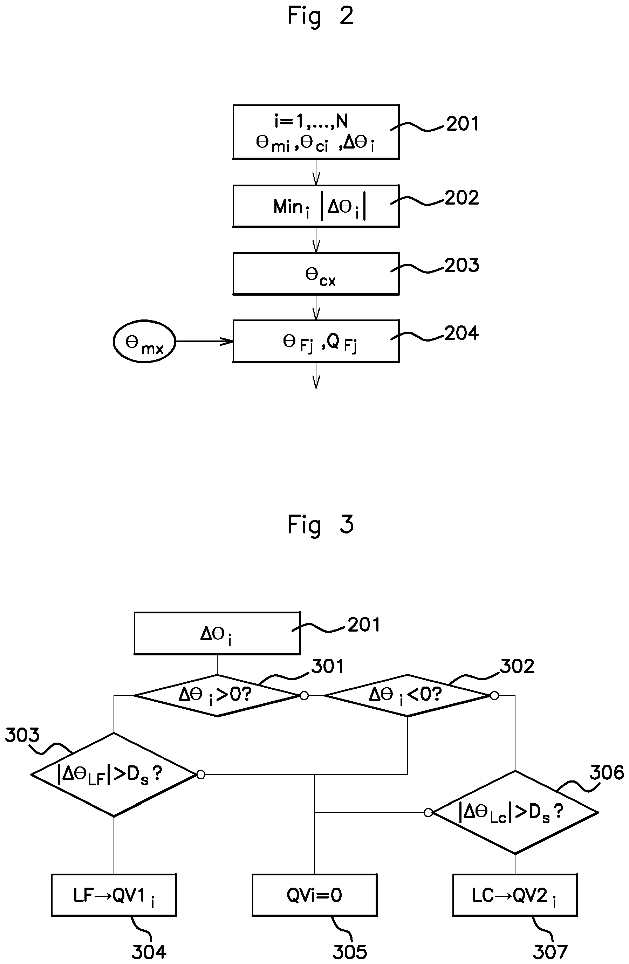

Un exemple de certaines étapes spécifiques d'un procédé de contrôle thermique selon l'invention mis en œuvre par un automatisme de gestion thermique d'un dispositif de contrôle thermique selon l'invention est représenté figures 2 et 3. Les caractéristiques générales non spécifiques à l'invention d'un procédé de contrôle thermique et d'un automatisme de gestion thermique de cabines d'un véhicule bien connues en elles-mêmes ne sont pas décrites en détail.

La figure 2 représente en particulier un exemple de logique de contrôle des dispositifs 19, 20 d'alimentation en air de la chambre de mélange pouvant être mise en œuvre dans un procédé selon l'invention.

Il est supposé que le véhicule comprend un nombre N de cabines représentées dans ce qui suit et sur les figures 2 et 3 par l'index i.

Lors de l'étape 201, pour les différentes cabines i, c'est-à-dire pour i = 1, ..., N, une erreur de température Δθi entre une température de consigne θci pour cette cabine et une température mesurée θmi pour cette cabine est calculée. La température de consigne θci peut être une température de consigne à l'intérieur de la cabine, ajustée par un utilisateur par action sur une commande d'ajustement de consigne, ou une température de consigne calculée, par exemple une température de consigne calculée de l'air alimentant la cabine, elle-même calculée en fonction de la température mesurée dans la cabine, de la température de consigne à l'intérieur de la cabine ajustée par un utilisateur, et éventuellement d'autres paramètres. De même, la température mesurée θmi peut être la température mesurée à l'intérieur de la cabine, ou une température mesurée de l'air alimentant la cabine.

Lors de l'étape 202, la valeur minimale Minᵢ|Δθi| sur les différentes cabines i de la valeur absolue de cette erreur de température est déterminée.

En fonction de cette valeur minimale, une température de consigne θcx de l'air dans la chambre de mélange (ou à la sortie de cette dernière) peut être déterminée lors de l'étape 203 selon une loi d'asservissement en température telle qu'une loi PID (proportionnelle, intégrale, dérivée).

À partir de cette température de consigne θcx de l'air dans la chambre de mélange et de la température mesurée θmx de l'air dans la chambre de mélange (ou à la sortie de cette dernière), le fonctionnement de chaque dispositif 19, 20 d'alimentation en air est commandé lors de l'étape 204, et ce de façon connue en soi, notamment pour délivrer un débit d'air QFj à une température θFj, j étant l'index représentant les différents dispositifs d'alimentation en air (étant égal à 1 ou 2 dans l'exemple représenté figure 1).

La figure 3 représente un exemple de logique de commande d'une vanne trois voies dans un procédé selon l'invention pour l'ajustement individuel de température de l'air d'alimentation d'une cabine i.

L'erreur de température Δθi déterminée lors de l'étape 201 est comparée à la valeur nulle lors de deux tests 301 et 302 (qui peuvent bien sûr être rassemblés en un seul test logique). Lors du premier test 301 on détermine si Δθi > 0. Si tel est le cas, cela signifie qu'il convient de refroidir la cabine i. On examine alors lors d'un test 303 subséquent si la différence ΔθLF = θLF-θmx entre la température θLF du liquide caloporteur au nœud de prélèvement froid relié à la vanne et la température mesurée θmx de l'air en provenance de la chambre de mélange est, en valeur absolue, ou non supérieure à une valeur seuil Ds prédéterminée, par exemple de l'ordre de 5° C, soit |ΔθLF| > Ds. Si tel est le cas, l'entrée de la vanne reliée à ce nœud de prélèvement froid est ouverte lors de l'étape 304, de sorte que la vanne alimente le deuxième circuit de l'échangeur individuel de la cabine i par un débit QVli de liquide caloporteur froid. Si tel n'est pas le cas, la vanne est fermée lors de l'étape 305, le débit QVi délivré par cette vanne étant nul, la température de la cabine i n'étant pas ajustée individuellement.

Si le test 301 détermine que la condition Δθi > 0 n'est pas satisfaite, on détermine lors d'un deuxième test 302 si Δθi < 0. Si cette condition est satisfaite, cela signifie qu'il convient de réchauffer la cabine i. On examine alors lors d'un test 306 subséquent si la différence ΔθLC = θLC-θmx entre la température θLC du liquide caloporteur au noeud de prélèvement chaud relié à la vanne et la température mesurée θmx de l'air en provenance de la chambre de mélange est, en valeur absolue, ou non supérieure à une valeur seuil Ds prédéterminée, par exemple de l'ordre de 5° C, soit |ΔθLC| > Ds. Si tel est le cas, l'entrée de la vanne reliée à ce nœud de prélèvement chaud est ouverte lors de l'étape 307, de sorte que la vanne alimente le deuxième circuit de l'échangeur individuel de la cabine i par un débit QV2i de liquide caloporteur chaud. Si tel n'est pas le cas, la vanne est fermée lors de l'étape 305, le débit QVi délivré par cette vanne étant nul, la température de la cabine i n'étant pas ajustée individuellement.

Si le test 302 détermine que la condition Δθi < 0 n'est pas non plus satisfaite, la vanne est fermée lors de l'étape 305, le débit QVi délivré par cette vanne étant nul, la température de la cabine i n'étant pas ajustée individuellement.

En particulier, dans un procédé selon l'invention, le deuxième circuit d'un échangeur 64, 75, 86, 108, 119 individuel est alimenté par un liquide caloporteur si et seulement si la température de ce liquide caloporteur présente une différence par rapport à la température de l'air circulant dans le premier circuit de l'échangeur 64, 75, 86, 108, 119 individuel, c'est-à-dire de l'air en sortie de la chambre de mélange 12, qui est supérieure, en valeur absolue, à une valeur seuil Ds prédéterminée, qui est de préférence supérieure à 1° C, par exemple comprise entre 2° C et 10° C, notamment de l'ordre de 5° C. Si cette condition n'est pas respectée, le deuxième circuit de l'échangeur individuel n'est pas alimenté, et la température de l'air alimentant la cabine correspondante n'est pas ajustée individuellement.

L'invention peut faire l'objet de nombreuses variantes de réalisation par rapport aux exemples représentés et décrits ci-dessus. La nature, le nombre de boucles de régulation thermique à liquide caloporteur monophasique et la façon de relier l'une au moins de ces boucles à des échangeurs de chaleur d'ajustement individuel de la température dans chaque cabine peuvent faire l'objet de toutes variantes. Par ailleurs, rien n'empêche de prévoir plusieurs échangeurs individuels interposés (en parallèle ou en série) sur une même conduite d'alimentation propre à une cabine. Rien n'empêche également de prévoir plusieurs conduites d'alimentation exemptes d'échangeur individuel, ou au contraire que toutes les conduites d'alimentation des différentes cabines soient dotées d'au moins un tel échangeur individuel. La logique de contrôle de l'alimentation de chaque deuxième circuit de chaque échangeur individuel peut faire l'objet de toutes variantes appropriées.

L'invention s'applique avantageusement au contrôle thermique des cabines d'un aéronef tel qu'un avion de ligne. Elle s'applique néanmoins également à tous autres véhicules dans lesquels le même problème se pose, par exemple les trains, les navires... Un véhicule selon l'invention peut être doté d'un seul dispositif de contrôle thermique conforme à l'invention ou au contraire de plusieurs dispositifs de contrôle thermique conformes à l'invention.

## Revendications

1. Procédé de contrôle thermique d'une pluralité de cabines (13 à 18) d'un véhicule à partir d'une chambre de mélange (12) alimentée en air à partir d'au moins un dispositif (19, 20) d'alimentation en air dont au moins la température est contrôlée, chaque cabine étant alimentée en air :
- à partir de la chambre de mélange (12),
- par une conduite (63, 74, 85, 96, 107, 118) d'alimentation propre à cette cabine,
- indépendamment de chaque autre cabine,
- au moins une cabine (13, 14, 15, 17, 18) est alimentée en air à une température ajustée par au moins un échangeur de chaleur, dit échangeur (64, 75, 86, 108, 119) individuel, associé à ladite conduite (63, 74, 85, 96, 107, 118) d'alimentation propre à cette cabine,
- de l'air en provenance de la chambre de mélange (12) traversant un premier circuit de chaque échangeur (64, 75, 86, 108, 119) individuel associé à ladite conduite (63, 74, 85, 96, 107, 118) d'alimentation propre à une cabine et alimentant indépendamment ladite cabine (13, 14, 15, 17, 18), ce premier circuit étant interposé entre ladite cabine (13, 14, 15, 17, 18) et la chambre de mélange (12) sur ladite conduite (63, 74, 85, 96, 107, 118) d'alimentation propre à ladite cabine,
- au moins un deuxième circuit d'au moins un échangeur (64, 75, 86, 108, 119) individuel associé à une conduite d'alimentation propre à une cabine est alimenté par un fluide caloporteur en provenance d'au moins une boucle (31, 51) de régulation thermique du véhicule,
**caractérisé en ce que**
- ce fluide caloporteur étant sélectionné :
∘ parmi :
▪ au moins un fluide caloporteur prélevé sur une boucle de régulation thermique du véhicule à une température supérieure à la température de l'air en provenance de la chambre de mélange (12),
▪ au moins un fluide caloporteur prélevé sur une boucle de régulation thermique du véhicule à une température inférieure à la température de l'air en provenance de la chambre de mélange (12),
∘ pour que chaque échangeur (64, 75, 86, 108, 119) individuel associé à la conduite d'alimentation propre à ladite cabine ajuste individuellement la température de l'air alimentant ladite cabine en fonction d'une température de consigne pour ladite cabine.

2. Procédé selon la revendication 1 **caractérisé en ce que** ledit fluide caloporteur est sélectionné parmi :
- au moins un fluide caloporteur prélevé sur une boucle de régulation thermique du véhicule à une température supérieure à la température de l'air en provenance de la chambre de mélange (12), lorsque ladite température de consigne est supérieure à la température de l'air en provenance de la chambre de mélange (12),
- au moins un fluide caloporteur prélevé sur une boucle de régulation thermique du véhicule à une température inférieure à la température de l'air en provenance de la chambre de mélange (12), lorsque ladite température de consigne est inférieure à la température de l'air en provenance de la chambre de mélange (12).

3. Procédé selon la revendication 2 **caractérisé en ce que** le fluide caloporteur est sélectionné pour que chaque échangeur (64, 75, 86, 108, 119) individuel associé à la conduite d'alimentation propre à ladite cabine ajuste individuellement la température de l'air alimentant ladite cabine en fonction d'une température de consigne qui est une température de consigne de l'air alimentant ladite cabine (13, 14, 15, 17, 18).

4. Procédé selon l'une des revendications 1 à 3 **caractérisé en ce que** ledit fluide caloporteur sélectionné est un fluide caloporteur monophasique prélevé sur une boucle (31, 51) de régulation thermique.

5. Procédé selon l'une des revendications 1 à 4 **caractérisé en ce que** ledit fluide caloporteur sélectionné est prélevé sur une boucle (31, 51) de régulation thermique à liquide caloporteur monophasique de refroidissement d'équipements électroniques du véhicule.

6. Procédé selon l'une des revendications 1 à 5 **caractérisé en ce que** chaque deuxième circuit est alimenté en fluide caloporteur par l'intermédiaire d'une vanne (65, 76, 87, 109, 120) multivoies présentant une sortie reliée au deuxième circuit, une première entrée reliée à un premier prélèvement de fluide caloporteur d'une boucle (31, 51) de régulation thermique du véhicule et au moins une deuxième entrée reliée à un deuxième prélèvement de fluide caloporteur d'une boucle (31, 51) de régulation thermique du véhicule, le deuxième prélèvement étant adapté pour pouvoir délivrer du fluide caloporteur à une température différente de la température du fluide caloporteur pouvant être délivré par le premier prélèvement.

7. Procédé selon la revendication 6 **caractérisé en ce que** chaque deuxième circuit est alimenté en fluide caloporteur par l'intermédiaire d'une vanne (65, 76, 87) trois voies ayant deux entrées reliées à deux prélèvements distincts de fluide caloporteur à des températures distinctes, et une sortie reliée à l'une ou l'autre de ses deux entrées.

8. Dispositif de contrôle thermique d'une pluralité de cabines (13 à 18) d'un véhicule comprenant :
- une chambre de mélange (12),
- au moins un dispositif (19, 20) d'alimentation en air relié à la chambre de mélange (12) pour l'alimenter en air à température contrôlée,
- un automatisme de gestion thermique adapté pour contrôler au moins la température de l'air délivré par chaque dispositif (19, 20) d'alimentation en air à la chambre de mélange (12) en fonction d'au moins une température de consigne d'au moins une cabine du véhicule,
- chaque cabine (13 à 18) étant reliée à la chambre de mélange (12) par une conduite d'alimentation propre à cette cabine de façon à pouvoir être alimentée en air à partir de la chambre de mélange indépendamment de chaque autre cabine,
- au moins un échangeur de chaleur, dit échangeur (64, 75, 86, 108, 119) individuel, est associé à au moins une conduite (63, 74, 85, 96, 107, 118) d'alimentation propre à une cabine (13, 14, 15, 17, 18),
- chaque échangeur (64, 75, 86, 108, 119) individuel comprend :
∘ un premier circuit interposé, entre ladite cabine (13, 14, 15, 17, 18) et la chambre de mélange (12), sur ladite conduite (63, 74, 85, 96, 107, 118) d'alimentation propre à ladite cabine pour pouvoir être traversé par de l'air en provenance de la chambre de mélange (12) et alimenter ladite cabine (13, 14, 15, 17, 18),
∘ un deuxième circuit relié à au moins une boucle (31, 51) de régulation thermique à fluide caloporteur du véhicule pour pouvoir être alimenté par ce fluide caloporteur,
- ledit automatisme de gestion thermique est adapté pour alimenter au moins un deuxième circuit d'au moins un échangeur (64, 75, 86, 108, 119) individuel associé à une conduite d'alimentation propre à une cabine par un fluide caloporteur en provenance d'au moins une boucle (31, 51) de régulation thermique du véhicule,
**caractérisé en ce que**
- ledit automatisme de gestion thermique est adapté pour sélectionner ce fluide caloporteur :
∘ parmi :
▪ au moins un fluide caloporteur prélevé sur une boucle de régulation thermique du véhicule à une température supérieure à la température de l'air en provenance de la chambre de mélange (12),
▪ au moins un fluide caloporteur prélevé sur une boucle de régulation thermique du véhicule à une température inférieure à la température de l'air en provenance de la chambre de mélange (12),
∘ choisi pour que chaque échangeur (64, 75, 86, 108, 119) individuel associé à la conduite d'alimentation propre à ladite cabine ajuste individuellement la température de l'air alimentant ladite cabine en fonction d'une température de consigne pour ladite cabine.

9. Dispositif selon la revendication 8 **caractérisé en ce que** chaque deuxième circuit est relié à au moins une boucle (31, 51) de régulation thermique du véhicule par l'intermédiaire d'une vanne (65, 76, 87, 109, 120) multivoies présentant une sortie reliée au deuxième circuit, une première entrée reliée à un premier prélèvement de fluide caloporteur d'une boucle de régulation thermique du véhicule et au moins une deuxième entrée reliée à un deuxième prélèvement de fluide caloporteur d'une boucle de régulation thermique du véhicule, le deuxième prélèvement étant adapté pour pouvoir délivrer du fluide caloporteur à une température différente de la température du fluide caloporteur pouvant être délivré par le premier prélèvement.

10. Dispositif selon la revendication 9 **caractérisé en ce que** le premier prélèvement et chaque deuxième prélèvement sont des prélèvements distincts d'une même boucle (31, 51) de régulation thermique du véhicule.

11. Dispositif selon l'une des revendications 8 à 10 **caractérisé en ce qu'**au moins une boucle (31, 51) de régulation thermique du véhicule reliée à au moins un deuxième circuit est une boucle de régulation thermique à fluide caloporteur monophasique.

12. Dispositif selon l'une des revendications 8 à 11 **caractérisé en ce qu'**au moins une boucle (31, 51) de régulation thermique du véhicule reliée à au moins un deuxième circuit est une boucle de régulation thermique à liquide caloporteur monophasique de refroidissement d'équipements embarqués du véhicule.

13. Véhicule -notamment aéronef- comprenant au moins une pluralité de cabines (13 à 18), au moins un dispositif de contrôle thermique de chaque pluralité de cabines et au moins une boucle (31, 51) de régulation thermique à fluide caloporteur, **caractérisé en ce qu'**il comporte au moins un dispositif de contrôle thermique selon l'une des revendications 8 à 12.

## Patentansprüche

1. Verfahren zur Wärmesteuerung einer Vielzahl von Kabinen (13 bis 18) eines Fahrzeugs ausgehend von einer Mischkammer (12), die ausgehend von mindestens einer Luftversorgungsvorrichtung (19, 20) mit Luft versorgt wird, von der mindestens die Temperatur gesteuert wird, wobei jede Kabine mit Luft versorgt wird:
- ausgehend von der Mischkammer (12),
- durch eine Versorgungsleitung (63, 74, 85, 96, 107, 118), die dieser Kabine eigen ist,
- unabhängig von jeder anderen Kabine,
- wobei mindestens eine Kabine (13, 14, 15, 17, 18) mit Luft auf einer Temperatur versorgt wird, die durch mindestens einen als individueller Wärmetauscher (64, 75, 86, 108, 119) bezeichneten Wärmetauscher angepasst wird, welcher der dieser Kabine eigenen Versorgungsleitung (63, 74, 85, 96, 107, 118) zugeordnet ist,
- wobei aus der Mischkammer (12) stammende Luft einen ersten Kreis jedes individuellen Tauschers (64, 75, 86, 108, 119), der der einer Kabine eigenen Versorgungsleitung (63, 74, 85, 96, 107, 118) zugeordnet ist, durchströmt und die Kabine (13, 14, 15, 17, 18) unabhängig versorgt, wobei dieser erste Kreis zwischen der Kabine (13, 14, 15, 17, 18) und der Mischkammer (12) an der der Kabine eigenen Versorgungsleitung (63, 74, 85, 96, 107, 118) eingefügt ist,
- wobei mindestens ein zweiter Kreis mindestens eines individuellen Tauschers (64, 75, 86, 108, 119), der einer einer Kabine eigenen Versorgungsleitung zugeordnet ist, mit einem Wärmeträgerfluid versorgt wird, das aus mindestens einer Wärmeregelschleife (31, 51) des Fahrzeugs stammt,
**dadurch gekennzeichnet, dass**
- dieses Wärmeträgerfluid ausgewählt ist:
-- aus:
--- mindestens einem Wärmeträgerfluid, das an einer Wärmeregelschleife des Fahrzeugs auf einer Temperatur entnommen wird, die höher ist als die Temperatur der aus der Mischkammer (12) stammenden Luft,
--- mindestens einem Wärmeträgerfluid, das an einer Wärmeregelschleife des Fahrzeugs auf einer Temperatur entnommen wird, die niedriger ist als die Temperatur der aus der Mischkammer (12) stammenden Luft,
-- sodass jeder individuelle Tauscher (64, 75, 86, 108, 119), der der der Kabine eigenen Versorgungsleitung zugeordnet ist, die Temperatur der die Kabine versorgenden Luft in Abhängigkeit von einer Solltemperatur für die Kabine individuell anpasst.

2. Verfahren nach Anspruch 1, **dadurch gekennzeichnet, dass** das Wärmeträgerfluid ausgewählt ist aus:
- mindestens einem Wärmeträgerfluid, das an einer Wärmeregelschleife des Fahrzeugs auf einer Temperatur entnommen wird, die höher ist als die Temperatur der aus der Mischkammer (12) stammenden Luft, wenn die Solltemperatur höher ist als die Temperatur der aus der Mischkammer (12) stammenden Luft,
- mindestens einem Wärmeträgerfluid, das an einer Wärmeregelschleife des Fahrzeugs auf einer Temperatur entnommen wird, die niedriger ist als die Temperatur der aus der Mischkammer (12) stammenden Luft, wenn die Solltemperatur niedriger ist als die Temperatur der aus der Mischkammer (12) stammenden Luft.

3. Verfahren nach Anspruch 2, **dadurch gekennzeichnet, dass** das Wärmeträgerfluid so ausgewählt wird, dass jeder individuelle Tauscher (64, 75, 86, 108, 119), der der der Kabine eigenen Versorgungsleitung zugeordnet ist, die Temperatur der die Kabine versorgenden Luft in Abhängigkeit von einer Solltemperatur, die eine Solltemperatur der die Kabine (13, 14, 15, 17, 18) versorgenden Luft ist, individuell anpasst.

4. Verfahren nach einem der Ansprüche 1 bis 3, **dadurch gekennzeichnet, dass** das ausgewählte Wärmeträgerfluid ein einphasiges Wärmeträgerfluid ist, das an einer Wärmeregelschleife (31, 51) entnommen wird.

5. Verfahren nach einem der Ansprüche 1 bis 4, **dadurch gekennzeichnet, dass** das ausgewählte Wärmeträgerfluid an einer Wärmeregelschleife (31, 51) mit einphasiger Wärmeträgerflüssigkeit zum Kühlen von elektronischen Einrichtungen des Fahrzeugs entnommen wird.

6. Verfahren nach einem der Ansprüche 1 bis 5, **dadurch gekennzeichnet, dass** jeder zweite Kreis mittels eines Mehrwegeventils (65, 76, 87, 109, 120) mit Wärmeträgerfluid versorgt wird, das einen Ausgang, der an den zweiten Kreis angeschlossen ist, einen ersten Eingang, der an eine erste Wärmeträgerfluidentnahme einer Wärmeregelschleife (31, 51) des Fahrzeugs angeschlossen ist, und mindestens einen zweiten Eingang aufweist, der an eine zweite Wärmeträgerfluidentnahme einer Wärmeregelschleife (31, 51) des Fahrzeugs angeschlossen ist, wobei die zweite Entnahme dafür geeignet ist, Wärmeträgerfluid auf einer Temperatur liefern zu können, die sich von der Temperatur des Wärmeträgerfluids, das von der ersten Entnahme geliefert werden kann, unterscheidet.

7. Verfahren nach Anspruch 6, **dadurch gekennzeichnet, dass** jeder zweite Kreis mittels eines Dreiwegeventils (65, 76, 87) mit Wärmeträgerfluid versorgt wird, das zwei Eingänge aufweist, die an zwei verschiedene Entnahmen von Wärmeträgerfluid auf verschiedene Temperaturen angeschlossen sind, und einen Ausgang, der an den einen oder den anderen seiner zwei Eingänge angeschlossen ist.

8. Vorrichtung zur Wärmesteuerung einer Vielzahl von Kabinen (13 bis 18) eines Fahrzeugs, umfassend:
- eine Mischkammer (12),
- mindestens eine Luftversorgungsvorrichtung (19, 20), die an die Mischkammer (12) angeschlossen ist, um dieselbe mit Luft auf gesteuerter Temperatur zu versorgen,
- eine Wärmeverwaltungsautomatik, die dafür geeignet ist, mindestens die Temperatur der von jeder Luftversorgungsvorrichtung (19, 20) an der Mischkammer (12) gelieferten Luft in Abhängigkeit von mindestens einer Solltemperatur mindestens einer Kabine des Fahrzeugs zu steuern,
- wobei jede Kabine (13 bis 18) durch eine dieser Kabine eigene Versorgungsleitung an die Mischkammer (12) angeschlossen ist, sodass sie ausgehend von der Mischkammer von jeder anderen Kabine unabhängig mit Luft versorgt werden kann,
- mindestens ein als individueller Tauscher (64, 75, 86, 108, 119) bezeichneter Wärmetauscher ist mindestens einer Versorgungsleitung (63, 74, 85, 96, 107, 118) zugeordnet, die einer Kabine (13, 14, 15, 17, 18) eigen ist,
- wobei jeder individuelle Tauscher (64, 75, 86, 108, 119) umfasst:
-- einen ersten Kreis, der an der der Kabine eigenen Versorgungsleitung (63, 74, 85, 96, 107, 118) zwischen der Kabine (13, 14, 15, 17, 18) und der Mischkammer (12) eingefügt ist, um von Luft, die aus der Mischkammer (12) stammt, durchströmt werden und die Kabine (13, 14, 15, 17, 18) versorgen zu können,
-- einen zweiten Kreis, der an mindestens eine Wärmeträgerfluid-Wärmeregelschleife (31, 51) des Fahrzeugs angeschlossen ist, um mit diesem Wärmeträgerfluid versorgt werden zu können,
- wobei die Wärmeverwaltungsautomatik dafür geeignet ist, mindestens einen zweiten Kreis mindestens eines individuellen Tauschers (64, 75, 86, 108, 119), der einer einer Kabine eigenen Versorgungsleitung zugeordnet ist, mit einem Wärmeträgerfluid zu versorgen, das aus mindestens einer Wärmeregelschleife (31, 51) des Fahrzeugs stammt,
**dadurch gekennzeichnet, dass**
- die Wärmeverwaltungsautomatik dafür geeignet ist, dieses Wärmeträgerfluid auszuwählen:
-- aus:
--- mindestens einem Wärmeträgerfluid, das an einer Wärmeregelschleife des Fahrzeugs auf einer Temperatur entnommen wird, die höher ist als die Temperatur der aus der Mischkammer (12) stammenden Luft,
--- mindestens einem Wärmeträgerfluid, das an einer Wärmeregelschleife des Fahrzeugs auf einer Temperatur entnommen wird, die niedriger ist als die Temperatur der aus der Mischkammer (12) stammenden Luft,
-- das so ausgewählt wird, dass jeder individuelle Tauscher (64, 75, 86, 108, 119), der der der Kabine eigenen Versorgungsleitung zugeordnet ist, die Temperatur der die Kabine versorgenden Luft in Abhängigkeit von einer Solltemperatur für die Kabine individuell anpasst.

9. Vorrichtung nach Anspruch 8, **dadurch gekennzeichnet, dass** jeder zweite Kreis mittels eines Mehrwegeventils (65, 76, 87, 109, 120) an mindestens eine Wärmeregelschleife (31, 51) des Fahrzeugs angeschlossen ist, das einen Ausgang, der an den zweiten Kreis angeschlossen ist, einen ersten Eingang, der an eine erste Wärmeträgerfluidentnahme einer Wärmeregelschleife des Fahrzeugs angeschlossen ist, und mindestens einen zweiten Eingang aufweist, der an eine zweite Wärmeträgerfluidentnahme einer Wärmeregelschleife des Fahrzeugs angeschlossen ist, wobei die zweite Entnahme dafür geeignet ist, Wärmeträgerfluid auf einer Temperatur liefern zu können, die sich von der Temperatur des Wärmeträgerfluids, das von der ersten Entnahme geliefert werden kann, unterscheidet.

10. Vorrichtung nach Anspruch 9, **dadurch gekennzeichnet, dass** die erste Entnahme und jede zweite Entnahme verschiedene Entnahmen ein und derselben Wärmeregelschleife (31, 51) des Fahrzeugs sind.

11. Vorrichtung nach einem der Ansprüche 8 bis 10, **dadurch gekennzeichnet, dass** mindestens eine Wärmeregelschleife (31, 51) des Fahrzeugs, die an mindestens einen zweiten Kreis angeschlossen ist, eine Wärmeregelschleife mit einphasigem Wärmeträgerfluid ist.

12. Vorrichtung nach einem der Ansprüche 8 bis 11, **dadurch gekennzeichnet, dass** mindestens eine Wärmeregelschleife (31, 51) des Fahrzeugs, die an mindestens einen zweiten Kreis angeschlossen ist, eine Wärmeregelschleife mit einphasiger Wärmeträgerflüssigkeit zum Kühlen von bordseitigen Einrichtungen des Fahrzeugs ist.

13. Fahrzeug - insbesondere Luftfahrzeug - das mindestens eine Vielzahl von Kabinen (13 bis 18), mindestens Vorrichtung zur Wärmesteuerung jeder Vielzahl von Kabinen, und mindestens eine Schleife (31, 51) zur Wärmeregelung mit Wärmeträgerfluid umfasst, **dadurch gekennzeichnet, dass** es mindestens eine Wärmesteuerungsvorrichtung nach einem der Ansprüche 8 bis 12 umfasst.

## Claims

1. Method for thermally controlling a plurality of cabins (13 to 18) of a vehicle from a mixing chamber (12) supplied with air from at least one air supply device (19, 20), at least the temperature of said air being controlled, each cabin being supplied with air:
- from the mixing chamber (12),
- by a supply conduit (63, 74, 85, 96, 107, 118) specific to this cabin,
- independently of each other cabin,
- at least one cabin (13, 14, 15, 17, 18) is supplied with air at a temperature adjusted by at least one heat exchanger, named individual exchanger (64, 75, 86, 108, 119), associated with said supply conduit (63, 74, 85, 96, 107, 118) specific to this cabin,
- air from the mixing chamber (12) passing through a first circuit of each individual exchanger (64, 75, 86, 108, 119) associated with said supply conduit (63, 74, 85, 96, 107, 118) specific to a cabin and independently supplying said cabin (13, 14, 15, 17, 18), this first circuit being interposed between said cabin (13, 14, 15, 17, 18) and the mixing chamber (12) on said supply conduit (63, 74, 85, 96, 107, 118) specific to said cabin,
- at least one second circuit of at least one individual exchanger (64, 75, 86, 108, 119) associated with a supply conduit specific to a cabin is supplied with a heat transfer fluid from at least one thermal regulation loop (31, 51) of the vehicle, **characterised in that**:
- this heat transfer fluid being selected:
∘ from:
▪ at least one heat transfer fluid bled from a thermal regulation loop of the vehicle at a temperature greater than the temperature of the air from the mixing chamber (12),
▪ at least one heat transfer fluid bled from a thermal regulation loop of the vehicle at a temperature lower than the temperature of the air from the mixing chamber (12),
∘ such that each individual exchanger (64, 75, 86, 108, 119) associated with the supply conduit specific to said cabin individually adjusts the temperature of the air supplying said cabin based on a set temperature for said cabin.

2. Method according to claim 1, **characterised in that** said heat transfer fluid is selected from:
- at least one heat transfer fluid bled from a thermal regulation loop of the vehicle at a temperature greater than the temperature of the air from the mixing chamber (12) when said set temperature is greater than the temperature of the air from the mixing chamber (12),
- at least one heat transfer fluid bled from a thermal regulation loop of the vehicle at a temperature lower than the temperature of the air from the mixing chamber (12) when said set temperature is lower than the temperature of the air from the mixing chamber (12).

3. Method according to claim 2, **characterised in that** the heat transfer fluid is selected such that each individual exchanger (64, 75, 86, 108, 119) associated with the supply conduit specific to said cabin individually adjusts the temperature of the air supplying said cabin based on a set temperature which is a set temperature of the air supplying said cabin (13, 14, 15, 17, 18).

4. Method according to any one of claims 1 to 3, **characterised in that** said selected heat transfer fluid is a monophasic heat transfer fluid bled from a thermal regulation loop (31, 51).

5. Method according to any one of claims 1 to 4, **characterised in that** said selected heat transfer fluid is bled from a monophasic heat transfer liquid thermal regulation loop (31, 51) for cooling electronic equipment of the vehicle.

6. Method according to any one of claims 1 to 5, **characterised in that** each second circuit is supplied with heat transfer fluid via a multi-way valve (65, 76, 87, 109, 120) having an outlet connected to the second circuit, a first inlet connected to a first heat transfer fluid bleed point of a thermal regulation loop (31, 51) of the vehicle and at least one second inlet connected to a second heat transfer fluid bleed point of a thermal regulation loop (31, 51) of the vehicle, the second bleed point being suitable for being able to deliver heat transfer fluid at a temperature different from the temperature of the heat transfer fluid which can be delivered by the first bleed point.

7. Method according to claim 6, **characterised in that** each second circuit is supplied with heat transfer fluid via a three-way valve (65, 76, 87) having two inlets connected to two separate bleed points for heat transfer fluid at distinct temperatures, and an outlet connected to either one of its two inlets.

8. Device for thermally controlling a plurality of cabins (13 to 18) of a vehicle, comprising:
- a mixing chamber (12),
- at least one air supply device (19, 20) connected to the mixing chamber (12) for supplying same with air at a controlled temperature,
- an automatic thermal management arrangement suitable for controlling at least the temperature of the air delivered by each air supply device (19, 20) to the mixing chamber (12) based on at least one set temperature of at least one cabin of the vehicle,
- each cabin (13 to 18) being connected to the mixing chamber (12) by a supply conduit specific to this cabin so as to be able to be supplied with air from the mixing chamber independently of each other cabin,
**characterised in that**:
- at least one heat exchanger, named individual exchanger (64, 75, 86, 108, 119), is associated with at least one supply conduit (63, 74, 85, 96, 107, 118) specific to a cabin (13, 14, 15, 17, 18),
- each individual exchanger (64, 75, 86, 108, 119) comprises:
∘ a first circuit interposed between said cabin (13, 14, 15, 17, 18) and the mixing chamber (12) on said supply conduit (63, 74, 85, 96, 107, 118) specific to said cabin to be able to have air from the mixing chamber (12) pass therethrough and to supply said cabin (13, 14, 15, 17, 18),
∘ a second circuit connected to at least one heat transfer fluid thermal regulation loop (31, 51) of the vehicle to be able to be supplied with this heat transfer fluid,
- said automatic thermal management arrangement is suitable for supplying at least one second circuit of at least one individual exchanger (64, 75, 86, 108, 119) associated with a supply conduit specific to a cabin with a heat transfer fluid from at least one thermal regulation loop (31, 51) of the vehicle,
**characterised in that**:
- said automatic thermal management arrangement is suitable for selecting this heat transfer fluid:
∘ from:
▪ at least one heat transfer fluid bled from a thermal regulation loop of the vehicle at a temperature greater than the temperature of the air from the mixing chamber (12),
▪ at least one heat transfer fluid bled from a thermal regulation loop of the vehicle at a temperature lower than the temperature of the air from the mixing chamber (12),
∘ selected such that each individual exchanger (64, 75, 86, 108, 119) associated with the supply conduit specific to said cabin individually adjusts the temperature of the air supplying said cabin based on a set temperature for said cabin.

9. Device according to claim 8, **characterised in that** each second circuit is connected to at least one thermal regulation loop (31, 51) of the vehicle via a multi-way valve (65, 76, 87, 109, 120) having an outlet connected to the second circuit, a first inlet connected to a first heat transfer fluid bleed point of a thermal regulation loop of the vehicle and at least one second inlet connected to a second heat transfer fluid bleed point of a thermal regulation loop of the vehicle, the second bleed point being suitable for being able to deliver heat transfer fluid at a temperature different from the temperature of the heat transfer fluid which can be delivered by the first bleed point.

10. Device according to claim 9, **characterised in that** the first bleed point and each second bleed point are separate bleed points of a same thermal regulation loop (31, 51) of the vehicle.

11. Device according to any one of claims 8 to 10, **characterised in that** at least one thermal regulation loop (31, 51) of the vehicle connected to at least one second circuit is a monophasic heat transfer fluid thermal regulation loop.

12. Device according to any one of claims 8 to 11, **characterised in that** at least one thermal regulation loop (31, 51) of the vehicle connected to at least one second circuit is a monophasic heat transfer liquid thermal regulation loop for cooling equipment on board the vehicle.

13. Vehicle - in particular an aircraft - comprising at least one plurality of cabins (13 to 18), at least one device for thermally controlling each plurality of cabins and at least one heat transfer fluid thermal regulation loop (31, 51), **characterised in that** it comprises at least one thermal control device according to any one of claims 8 to 12.
